(19) Europäisches Patentamt
European Patent Office
Office européen des brevets

(11) **EP 2 825 361 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(51) Int Cl.:
**B29C 45/26** *(2006.01)*  **B29C 45/42** *(2006.01)*
**B29C 49/64** *(2006.01)*  **B29C 45/72** *(2006.01)*

(21) Anmeldenummer: **13709202.9**

(22) Anmeldetag: **13.03.2013**

(86) Internationale Anmeldenummer:
**PCT/EP2013/055163**

(87) Internationale Veröffentlichungsnummer:
**WO 2013/135779 (19.09.2013 Gazette 2013/38)**

(54) **SPRITZGIESSWERKZEUGPLATTE SOWIE SPRITZGIESSWERKZEUG MIT EINER SOLCHEN**

INJECTION MOLD PLATE AND INJECTION MOLD HAVING SUCH AN INJECTION MOLD PLATE

PLAQUE OUTIL DE MOULAGE PAR INJECTION AINSI QU'OUTIL DE MOULAGE PAR INJECTION ÉQUIPÉ D'UNE TELLE PLAQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2012 DE 102012102266**

(43) Veröffentlichungstag der Anmeldung:
**21.01.2015 Patentblatt 2015/04**

(73) Patentinhaber: **MHT Mold & Hotrunner Technology AG**
**65239 Hochheim (DE)**

(72) Erfinder:
• **THÖMMES, Helmut**
**54441 Kastel-Staadt (DE)**
• **WAGNER, Christian**
**55126 Mainz (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
WO-A1-01/38067        WO-A1-2006/060893
WO-A1-2010/066308     US-A- 4 219 323

• **Kob, Sabine: "Höhere Leistung, geringer Aufwand", , Mai 2011 (2011-05), Seiten 12-14, XP002716973, Gefunden im Internet: URL:http://fzarchiv.sachon.de/pdf/Getraenk e-Fachzeitschriften/Getraenkeindustrie/201 1/05_11/GI_5-11_12-14_Hoehere_Leistung_ger inger_Aufwand.pdf [gefunden am 2013-11-26]**
• **Anonym: "Maschinenleistung deutlich steigern", , 18. Juli 2011 (2011-07-18), Seiten 1-1, XP002716974, Gefunden im Internet: URL:http://www.verpackungsrundschau.de/new s/show/branchen-news/43986 [gefunden am 2013-11-26]**
• **Anonym: "mht News", , 16. November 2010 (2010-11-16), Seiten 1-2, XP002716975, Gefunden im Internet: URL:http://www.sams-ag.com/images/mht-pdf/ Newsletter%20102010.pdf [gefunden am 2013-11-26]**

EP 2 825 361 B1

**Beschreibung**

Die vorliegende Erfindung betrifft eine Spritzgießwerkzeugplatte zur Verwendung in einem Spritzgießwerkzeug zur Herstellung von Formlingen mit einer Vielzahl von in Spalten und Reihen angeordneten Handhabungselementen, wobei der Abstand r zwischen benachbarten Handhabungselementen innerhalb der Reihe größer als der Abstand s zwischen benachbarten Handhabungselementen innerhalb der Spalten ist.

Das Spritzgießen ist eines der wichtigsten Verfahren zur Herstellung von Formlingen bzw. Formteilen. Hierbei wird die im Allgemeinen ursprünglich als Pulver oder Granulat vorliegende Formmasse erhitzt, plastifiziert und unter hohem Druck in ein entsprechendes Formwerkzeug gedrückt. Die Formmasse erstarrt in dem Formwerkzeug und wird anschließend dem geöffneten Werkzeug entnommen. Beispielsweise werden handelsübliche PET-Flaschen durch Streckblasformen eines Hohlkörperpreforms bzw. Hohlkörpervorformlingen hergestellt. Dabei wird der Preform in einem ersten Schritt mittels Spritzgießen erstellt. Das sich an den Spritzgießvorgang anschließende Streckblasformen kann entweder unmittelbar nach Herstellung des Preforms oder zu einem späteren Zeitpunkt erfolgen.

Bei der Herstellung der entsprechenden Spritzgießformen ist ein hoher Aufwand von Nöten, da die Spritzgießform einerseits für sehr hohe Drücke ausgelegt sein muss und andererseits entsprechend beheizte und/oder gekühlte Kanäle aufweisen muss.

Auch wenn die vorliegende Erfindung prinzipiell in Spritzgießwerkzeugen jeglicher Art verwendet werden könnte, wird sie im Folgenden anhand eines Spritzgießwerkzeuges zur Herstellung von PET-Preforms beschrieben. Solche Spritzgießwerkzeuge weisen eine Vielzahl, z.B. 96, Kavitäten auf, in die entsprechend ausgebildete Werkzeugkerne eingeführt werden. Bei geschlossenem Werkzeug, d.h., wenn der Kern in die entsprechenden Kavität eingesetzt ist, wird zwischen dem Kern einerseits und der Kavität andererseits ein Raum, der sogenannte Formraum gebildet. In diesen Raum wird dann der plastifizierte Kunststoff, z.B. PET, unter hohem Druck eingespritzt. Sobald der PET-Preform genügend abgekühlt ist, kann die Form geöffnet und der Preform entnommen werden. Um die Zykluszeiten, d.h. die Zeit von einem Spritzvorgang bis zu dem nächsten Spritzvorgang, zu reduzieren, ist es bereits üblich, den Preform zu einem sehr frühen Zeitpunkt aus der Form zu entnehmen, zudem der Preform an seinen Außenflächen bereits fest ist, dessen innerer Bereich jedoch noch flüssig ist. In diesem Zustand wird der Preform im Allgemeinen in eine sogenannte Entnahmeplatte übergeben, die einen Satz aus Aufnahmekavitäten aufweist. Dabei umfasst der Aufnahmekavitätensatz so viele Aufnahmekavitäten wie das Werkzeug Kerne bzw. Kavitäten hat, so dass von jedem Kern der erstarrte Preform in eine Aufnahmekavität übergeben werden kann. So ist es beispielsweise bei den sogenannten Vertikalwerkzeugen, d.h. denjenigen Spritzgießwerkzeugen, die sich durch eine vertikale Bewegung des einen Werkzeugteils gegenüber dem anderen öffnen, üblich, die Werkzeugform bereits nach z.B. 10 Sekunden zu öffnen, eine Entnahmeplatte mit entsprechenden Aufnahmekavitäten zwischen die Werkzeugteile in die Form einzufahren, die einzelnen Preforms in die Aufnahmekavitäten mittels Schwerkraft hineinfallen zu lassen, die Entnahmeplatte mit den Preforms aus dem Werkzeug herauszuformen, die Form wieder zu schließen und den nächsten Spritzgießvorgang zu beginnen. Während des nächsten Spritzgießvorgangs verbleiben die vorherigen Preforms in den Aufnahmekavitäten, die üblicherweise gekühlt werden.

Es sind auch Ausführungsformen bekannt, bei denen die einzelnen Preforms mittels einer Greifereinheit aus der Form entnommen und in die außerhalb der Werkzeugform angeordnete Entnahmeplatte übergeben werden.

Da der Preform zur Abkühlung in der Aufnahmekavität des Standes der Technik eine verhältnismäßig lange Zeit verweilen muss, sodass in der Regel bereits der nächste Preform aus dem Spritzgießwerkzeug entnommen werden kann, bevor der Preform in der Aufnahmekavität soweit abgekühlt ist, dass er ohne die Gefahr einer Beschädigung entnommen werden kann, ist es bereits üblich, Entnahmeplatten zu verwenden, die mehrere Sätze von Aufnahmekavitäten besitzen, wobei jeder Satz so viele Aufnahmekavitäten aufweist, wie das Spritzgießwerkzeug Preforms pro Spritzzyklus bereitstellt. Die einzelnen Aufnahmekavitätensätze werden dann nacheinander mit Preforms bestückt, sodass der einzelne Preform länger als einen Spritzgießzyklus in der Aufnahmekavität verbleiben kann.

Bei der Herstellung von Preforms weisen die Spritzgießwerkzeuge zwei Werkzeughälften auf, die zwischen einer offenen und einer geschlossenen Position hin- und herbewegt werden können. Die eine Werkzeughälfte weist die sogenannte Kavitätenplatte auf, die eine Vielzahl von in Spalten und Reihen angeordnete Kavitäten hat, wobei der Abstand r zwischen benachbarten Kavitäten innerhalb der Reihen größer als der Abstand s zwischen benachbarten Kavitäten innerhalb der Spalten ist. Die andere Werkzeughälfte weist eine Kemplatte auf, die entsprechende Kerne aufweist, die im geschlossenen Zustand der Werkzeugform innerhalb der Kavitäten angeordnet sind. Daher sind auch die Kerne in einer Vielzahl von Spalten und Reihen angeordnet wobei der Abstand r zwischen benachbarten Kernen innerhalb der Reihen größer als der Abstand s zwischen benachbarten Kernen innerhalb der Spalten ist. Sowohl die Kerne als auch die Kavitäten sind Handhabungselemente im Sinne der vorliegenden Erfindung. Handhabungselemente sind alle Elemente, die mit den Formlingen während der Herstellung oder der Entnahme oder der darauffolgenden Kühlung in Kontakt treten oder diese bearbeiten.

In der Regel erfolgt die Zufuhr der plastifizierten PET-Schmelze über Öffnungen im Boden der Kavitäten. Um die plastifizierte Schmelze gleichmäßig allen Kavitäten zuführen zu können, weist die Kavitätenplatte ein entsprechendes Heißkanalnetzwerk auf, das im Inneren der Kavitätenplatte angeordnet ist. Da der Anguss, d.h. der Punkt an dem die plastifizierte Schmelze der Kavitätenplatte zugeführt wird, in der Regel in der Mitte der Platte angeordnet ist, erstreckt sich das Heißkanalnetzwerk von dem Anguss zu jeder Kavität, wobei die Kanäle immer schmaler werden, je weiter sie von dem Anguss entfernt sind. In der Nähe des Angusses wird jedoch ein Abschnitt des Heißkanals einen relativ großen Querschnitt haben, so dass benachbarte Kavitäten nicht zu dicht nebeneinander angeordnet werden können.

Bei dem beschriebenen PET-Werkzeug wird deswegen häufig ein Abstand von etwa 140 mm zwischen dem Mittelpunkt einer Kavität und dem Mittelpunkt der in Reihenrichtung unmittelbar benachbarten Kavität eingehalten.

Ein PET-Werkzeug mit verschiedenen Spritzgießwerkzeugplatten als Form-, Entnahme- und Nachbehandlungsplatte ist aus dem Artikel "Höhere Leistung, geringer Aufwand" (Autorin: Kob, Sabine) in der Zeitschrift Getränkeindustrie, Ausgabe Mai 2011, Seite 12 bis 14, bekannt. Weitere Werkzeuge für Formlinge sind aus der WO2006060893 und der WO2010066308 bekannt.

Grundsätzlich sind auch Anwendungen denkbar, bei denen nicht der Querschnitt des Heißkanals, sondern möglicherweise der Querschnitt von Kühlkanäle in bestimmten Bereichen der Kavitätenplatte oder der Kernplatte ein zu dichtes Anordnen der Handhabungselemente verhindert.

In der Regel kann der Abstand s zwischen benachbarten Kavitäten innerhalb der Spalten kleiner gewählt werden.

Aufgrund des relativ großen Abstandes r zwischen benachbarten Kavitäten und Kernen innerhalb der Reihen können die einzelnen Aufnahmekavitätensätze ineinander verschachtelt angeordnet werden, sodass beispielsweise jeweils zwischen zwei Aufnahmekavitäten eines ersten Satzes jeweils eine Aufnahmekavität eines zweiten Satzes angeordnet ist. Anders ausgedrückt, gehört beispielsweise bei zwei Aufnahmekavitätensätzen in Reihenrichtung jede zweite Aufnahmekavität zum ersten Aufnahmekavitätensatz, während die anderen Aufnahmekavitäten zum zweiten Aufnahmenkavitätensatz gehören.

Sobald sich daher das Spritzgießwerkzeug öffnet, kann die Entnahmeplatte in das geöffnete Werkzeug bewegt werden und die Preforms aufnehmen. Aufgrund der speziellen Anordnung der Aufnahmekavitätensätze ist dann im Falle von zwei Aufnahmekavitätensätzen jede zweite Aufnahmekavität von einem Preform besetzt, während die anderen Aufnahmekavitäten der Entnahmeplatte leer sind. Die Entnahmeplatte wird nun aus dem Werkzeug herausgefahren, dieses wird geschlossen und der nächste Satz aus Preforms gefertigt. Sobald die Form wieder geöffnet ist, wird die Entnahmeplatte wieder zwischen die geöffneten Werkzeughälften gefahren, jedoch diesmal in eine versetzte Position, sodass nun die Preforms des nächsten Satzes in die freien Aufnahmekavitäten des anderen Aufnahmekavitätensatzes übergeben werden können.

Sobald alle Aufnahmekavitäten bestückt sind, und die Entnahmeplatte wieder aus dem Werkzeug herausgefahren ist, müssen die am längsten in der Entnahmeplatte gehaltenen Preforms entfernt werden. Zu diesem Zweck wird eine Nachbehandlungsplatte, die mit Kühlstiften und Entnahmestiften ausgestattet ist, mit der Entnahmeplatte derart ausgerichtet, dass die Kühlstifte und die Entnahmestifte jeweils in die in der Entnahmeplatte gehaltenen Preforms eintauchen. Die Kühlstifte dienen der Zufuhr von Kühlmittel, z.B. Luft, während die Entnahmestifte derart betätigt werden können, z.B. durch Anlegen eines Unterdruckes, dass sie den entsprechenden Preform aus der Entnahmeplatte nehmen können. Um alle Preforms aus den unterschiedlichen Aufnahmekavitätensätzen entnehmen zu können, lässt sich die Nachbehandlungsplatte in verschiedenen zueinander versetzten Positionen mit der Entnahmeplatte ausrichten, sodass in jeder der unterschiedlichen Positionen die Entnahmestifte mit einem anderen Aufnahmekavitätensatz fluchten und die darin befindlichen Preforms dadurch entnommen werden können.

Grundsätzlich ist es wünschenswert, die Kavitäten und Kerne möglichst dicht beieinander anzuordnen, um Material und Gewicht der Spritzgießwerkzeuge zu reduzieren.

Innerhalb der Kavitätenplatte verläuft jedoch in der Regel mindestens ein Heißkanal zur Zuführung der plastifizierten Schmelze im Wesentlichen in Spaltenrichtung, was zur Folge hat, dass im Bereich dieses Heißkanals die Kavitäten nicht beliebig nah beieinander angeordnet werden können. Dieser Heißkanal legt daher beim Stand der Technik den Abstand von z. B. 140 mm zwischen benachbarten Kavitäten fest. Dies hat zur Folge, dass auch die Kerne den entsprechenden Abstand haben müssen, was wiederum zur Folge hat, dass die Aufnahmekavitäten eines Aufnahmekavitätensatzes ebenfalls einen Abstand von 140 mm von Mittelpunkt zu Mittelpunkt haben müssen. Um die Entnahme und die Nachbehandlung bzw. Kühlung der Preforms in der Entnahmeplatte zu gewährleisten, müssen dann auch die Entnahmestifte und die Kühlstifte der Nachbehandlungsplatte das gleiche Abstandsmaß haben.

Eine Verkürzung des üblichen Abstandsmaß von 140 mm würde daher Material und Gewicht nicht nur bei der Kavitätenplatte, sondern auch bei der Kernplatte sowie der Entnahmeplatte und der Nachbehandlungsplatte einsparen. Alternativ kann man natürlich auch bei einer gegebenen Plattengröße, die von der verwendeten Spritzgießmaschine abhängt, bei geringerem Abstand eine größere Anzahl von Handhabungselementen auf den Platten anordnen, so dass je Spritzgießzyklus eine größere Anzahl von Preforms hergestellt werden können.

Es ist daher Aufgabe der vorliegenden Erfindung, eine Spritzgießwerkzeugplatte der eingangsgenannten Art zur Verfügung zu stellen, bei der der Abstand zwischen benachbarten Handhabungselementen reduziert werden kann, ohne dass der im Allgemeinen notwendige Heißkanal beeinträchtigt wird.

Erfindungsgemäß wird diese Aufgabe dadurch gelöst, dass eine Reihe von Handhabungselementen durch zwei Gruppen von Handhabungselementen gebildet wird, wobei für den Abstand z zwischen den Gruppen von Handhabungselementen gilt $z = r(1 + \frac{a}{n})$, wobei r der Abstand der Handhabungselemente innerhalb einer Gruppe ist und $n, a \in IN$ mit $n > 1$.

Soweit in der vorliegenden Anmeldung von einem Abstand die Rede ist, ist damit immer der Abstand von Mittelpunkt zu Mittelpunkt gemeint, wenn nicht ausdrücklich anderes erwähnt ist. *IN* ist die Menge der natürlichen Zahlen (1, 2, 3.....). Durch die erfindungsgemäße Aufteilung der Handhabungselemente in zwei Gruppen können diese beiderseits des Heißkanals angeordnet werden, sodass innerhalb der Gruppen der Abstand zwischen den Handhabungselementen reduziert werden kann, während der Abstand z zwischen dem Handhabungselement der ersten Gruppe, welches der zweiten Gruppe am nächsten angeordnet ist und dem Handhabungselement der zweiten Gruppe, welches der ersten Gruppe von Handhabungselementen am nächsten angeordnet ist, größer gewählt wird.

Der Abstand kann allerdings nicht beliebig von dem Abstand r abweichen, da aufgrund des Vorsehens von mehreren Sätzen von Aufnahmekavitäten in der Entnahmeplatte und die damit verbundenen zueinander versetzten Übergabepositionen zwischen Entnahmeplatte einerseits und Kavitätenplatte oder Kernplatte andererseits es zwischen dem Abstand z zwischen den Gruppen von Handhabungselementen es zu Fehlanpassungen kommen kann.

Bei der erfindungsgemäßen Wahl des Abstandes ist jedoch gewährleistet, dass die Entnahmeplatte und Kavitätenplatte jederzeit passend zueinander positioniert werden können.

In einer bevorzugten Ausführungsform wird a < n gewählt. Durch diese Wahl können beispielsweise Aufnahmekavitäten der Entnahmeplatte in einer ersten Position zur Aufnahme von Preforms aus der ersten Gruppe der Kavitäten vorgesehen sein, während sie in einer anderen Position zur Aufnahme von Preforms aus der anderen Gruppe von Kavitäten vorgesehen sind. In der Regel ist es zweckmäßig n < 5 und vorzugsweise n = 3 zu wählen.

Weiterhin ist in einer besonders bevorzugten Ausführungsform vorgesehen, dass a = 1 ist.

Wie bereits ausgeführt, kann die Spritzgießwerkzeugplatte als Kavitäten- oder Kernplatte ausgebildet sein, sodass die Handhabungselemente dann Kavitäten oder Kerne sind, deren Innen- bzw. Außenkontur der Außen- bzw. Innenkontur eines herzustellenden Formlings entspricht.

Grundsätzlich kann die Spritzgießwerkzeugplatte jedoch auch eine Entnahmeplatte zur Entnahme von Formlingen aus einer Spritzgießform mit einer entsprechend ausgestalteten Kernplatte oder Kavitätenplatte sein, wobei dann die Handhabungselemente Elemente zur Aufnahme von Formlingen aus der Spritzgießform, vorzugsweise Aufnahmehülsen sind, wobei die Entnahmeplatte eine Mehrzahl von Handhabungselementensätze aufweist, wobei jeder Handhabungselementesatz eine Vielzahl von in Spalten und Reihen angeordneten Handhabungselementen aufweist, wobei der Abstand r zwischen benachbarten Handhabungselementen des Handhabungselementesatzes innerhalb der Reihen größer als der Abstand s zwischen benachbarten Handhabungselementen des Handhabungselementesatzes innerhalb der Spalten ist, wobei eine Reihe von Handhabungselementen des Handhabungselementesatzes durch zwei Gruppen von Handhabungselementen des Handhabungselementesatzes gebildet wird, wobei für den Abstand z zwischen den Gruppen von Handhabungselementen des Handhabungselementesatzes gilt $z = r(1 + \frac{a}{n})$, wobei r der Abstand der Handhabungselemente des Handhabungselementesatzes innerhalb einer Gruppe ist und $n, a \in IN$ mit $n > 1$ und $a < n$.

Sind daher die einzelnen Kerne und Kavitäten des Spritzgießwerkzeuges entsprechend dem Anspruch 1 angeordnet, so müssen auch die entsprechenden Aufnahmeelemente der Entnahmeplatte im gleichen Abstand angeordnet sein. Da die Entnahmeplatte im Allgemeinen mehrere Sätze von Preforms zur gleichen Zeit halten muss, die nacheinander in die entsprechenden Aufnahmeelemente übergeben werden, weist die Entnahmeplatte verschiedene Sätze aus Handhabungselementen bzw. Aufnahmeelementen auf. Vorzugsweise sollte daher bei jedem Handhabungselementesatz eine Reihe von Handhabungselementen durch zwei Gruppen von Handhabungselementen gebildet werden, wobei für den Abstand z die oben genannte Bedingung gilt.

Mit Vorteil beträgt die Anzahl der Handhabungselementesätze n. Mit anderen Worten wird n für die Bestimmung des Abstandes zwischen den Gruppen von Kavitäten und Kernen des Spritzgießwerkzeuges entsprechend der für die Entnahmeplatte vorgesehene Anzahl von Handhabungselementesätzen gewählt. Weist beispielsweise die Entnahmeplatte drei Handhabungselementesätze auf, so beträgt der Abstand z am Besten 4/3 x r.

In einer besonders bevorzugten Ausführungsform ist jedem Handhabungselement eines ersten Handhabungselementesatzes ein Handhabungselement eines zweiten Handhabungselementesatzes zugeordnet, wobei die Handhabungselemente dafür vorgesehen sind, nacheinander Formlinge aus der Spritzgießform und zwar aus der gleichen Kavität oder von dem gleichen Kern aufzunehmen. Dabei beträgt vorzugsweise der Abstand h zwischen den zugeordnete Handhabungselementen h = r/n.

In einer weiteren bevorzugten Ausführungsform ist die Spritzgießwerkzeugplatte eine Nachbehandlungsplatte, bei der die Handhabungselemente Entnahmeelemente, vorzugsweise Entnahmestifte, zur Entnahme der Formlinge aus einer Entnahmeplatte sind.

Der erfindungsgemäß gewählte Abstand zwischen den beiden Gruppen an Handhabungselementen für die Kernplatte und die Kavitätenplatte muss somit nicht nur für die Entnahmeplatte, sondern auch für die mit der Entnahmeplatte zusammenarbeitende Nachbehandlungsplatte entsprechend gewählt werden. Auch die Nachbehandlungsplatte kann im Falle von drei Handhabungselementensätzen der Entnahmeplatte in drei verschiedenen Positionen relativ zur Entnahmeplatte positioniert werden, wobei die Entnahmeelemente jeweils mit einem anderen Handhabungselementesatz der Entnahmeplatte ausgerichtet sind und die in diesen Handhabungselementesatz angeordneten Preforms entnehmen können.

In einer weiteren bevorzugten Ausführungsform weist die Nachbehandlungsplatte zumindest ein Nachbehandlungsset auf, welches eine Vielzahl von in Spalten und Reihen angeordneten Nachbehandlungselemente, vorzugweise Kühlstifte aufweist, wobei der Abstand r zwischen benachbarten Nachbehandlungselementen des Nachbehandlungssatzes innerhalb der Reihen größer als der Abstand s zwischen benachbarten Nachbehandlungselementen des Nachbehandlungssatzes innerhalb der Spalten ist, wobei eine Reihe von Nachbehandlungselementen des Nachbehandlungssatzes durch zwei Gruppen von Nachbehandlungselementen gebildet wird, wobei für den Abstand z zwischen den Gruppen von Nachbehandlungselementen gilt $z = r\left(1 + \dfrac{a}{n}\right),$ n wobei r der Abstand der Nachbehandlungselementen innerhalb einer Gruppe ist und $n,\ a \in IN$ mit $n > 1$ und $a < n$.

Mit anderen Worten weist die Nachbehandlungsplatte nicht nur Entnahmestifte sondern auch entsprechende Kühlstifte auf, die in die Preforms eingesetzt werden und die Preforms von innen kühlen. Für die Kühlstifte muss dann ebenfalls die Anordnungsregel gelten.

Am Besten beträgt die Anzahl der Nachbehandlungssätze (n - 1). Im Falle von 3 Sätzen von Aufnahmekavitäten sind somit am besten 2 Nachbehandlungssätze vorgesehen, so dass sobald die Nachbehandlungsplatte zu der Entnahmeplatte ausgerichtet ist, ein Aufnahmekavitätensatz mit Hilfe der Entnahmeelemente geleert werden kann, während die beiden anderen Aufnahmekavitätensätze bzw. die in diesen befindlichen Preforms mit den Kühlstiften der beiden Nachbehandlungssätzen gekühlt werden können.

Beschrieben wurden eine Kavitätenplatte, eine Kernplatte, eine Entnahmeplatte und eine Nachbehandlungsplatte, die jeweils Handhabungselemente aufweisen, die in Gruppen angeordnet sind, die in einem entsprechenden Abstand zueinander, wie oben ausgeführt wurde, angeordnet sind. Mit diesen einzelnen Elementen kann somit ein Spritzgießwerkzeug zur Herstellung von Preforms zusammengesetzt werden. Dieses weist dann auf:

i) eine Kavitätenplatte gemäß der vorliegenden Erfindung,
ii) eine Kernplatte gemäß der vorliegenden Erfindung, wobei die Kavitätenplatte und die Kernplatte relativ zueinander zwischen einer geschlossenen Position und einer geöffneten Position hin- und herbewegbar sind, wobei in der geschlossenen Position die als Kerne ausgebildeten Handhabungselemente der Kernplatte in die als Kavitäten ausgebildeten Handhabungselemente der Kavitätenplatte eingesetzt sind, so dass sich zwischen Kernen einerseits und Kavitäten andererseits Formräume bilden, deren Innenkontur der Außenkontur der herzustellenden Formlingen entspricht,
iii) eine erfindungsgemäße Entnahmeplatte, wobei die Entnahmeplatte zwischen einer Außenposition, in der die Entnahmeplatte nicht zwischen der Kavitätenplatte und der Kernplatte angeordnet ist, und mindestens zwei Entnahmepositionen, in denen die Entnahmeplatte zwischen der Kavitätenplatte und der Kernplatte angeordnet ist, hin- und herbewegt werden kann, wobei in jeder Entnahmeposition jeweils ein Handhabungselementesatz zu der Kern- oder Kavitätenplatte ausgerichtet angeordnet ist, sodass die Formlinge aus der Kern- oder Kavitätenplatte zu den Handhabungselementen des ausgerichtet angeordneten Handhabungselementesatzes übergeben werden können, und
iv) eine erfindungsgemäße Nachbehandlungsplatte.

Weitere Vorteile, Merkmale und Anwendungsmöglichkeiten der vorliegenden Erfindung werden deutlich anhand der folgenden Beschreibung einer bevorzugten Ausführungsform sowie der zugehörigen Figuren. Es zeigen:

Figur 1 eine schematische Ansicht einer Kern- oder Kavitätenplatte,
Figur 2 eine schematische Draufsicht auf eine Entnahmeplatte,
Figur 3 eine schematische Draufsicht auf eine Nachbehandlungsplatte und
Figur 4 eine schematische Seitenansicht auf eine Entnahmeplatte und eine Nachbehandlungsplatte.

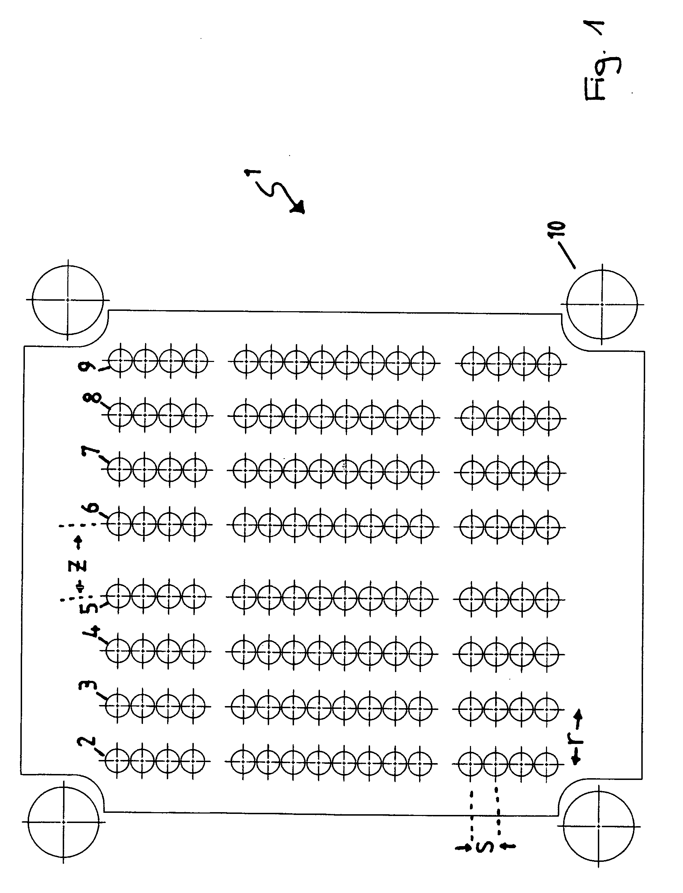

Figur 1 zeigt eine schematische Draufsicht auf eine Kernplatte gemäß einer bevorzugten Ausführungsform. Die Kernplatte 1 weist eine Reihe von als Kerne ausgebildete Handhabungselemente 2-9 auf, die in Reihen und Spalten angeordnet sind.

Die Kernplatte arbeitet mit einer entsprechenden Kavitätenplatte zusammen, deren Kavitäten im gleichen Abstand zueinander angeordnet sind, wie die Kerne der Kernplatte zueinander angeordnet sind.

Im Folgenden wird daher anhand von Figur 1 die Anordnung der Kerne an der Kernplatte beschrieben. Die Anordnung der Kavitäten in der Kavitätenplatte ist jedoch gleich.

Sowohl die Kern- als auch die Kavitätenplatte sind Teile eines Spritzgießwerkzeuges, wobei entweder die Kavitätenplatte oder die Kernplatte entlang der Führungssäulen 10 auf die andere Platte zu- oder von dieser wegbewegt werden kann. In der geschlossenen Position werden die Kerne der Kernplatte innerhalb der Kavitäten der Kavitätenplatte zu liegen kommen, um Formräume zu bilden, deren Innenkontur der Außenkontur der herzustellenden Preforms entspricht.

Die Kerne der Kernplatte 1, die in Figur 1 dargestellt ist, haben in Spaltenrichtung den Abstand s zueinander. In Reihenrichtung haben die Kerne den Abstand r, welcher größer als der Abstand s ist. In Spaltenrichtung gibt es zwei Zwischensprünge, d.h. zwei Reihen, in denen keine Kerne angeordnet sind. Diese Zwischensprünge werden benötigt, um entsprechende Schieberelemente zur Öffnung von Halsbacken aufzunehmen. Diese haben jedoch mit der vorliegenden Erfindung nichts zu tun. Erfindungsgemäß sind die Kerne einer Reihe in zwei Gruppen aufgeteilt. Die erste Gruppe besteht aus den Kerne 2, 3, 4 und 5, während die andere Gruppe aus den Kerne 6, 7, 8 und 9 besteht. Der Abstand zwischen den Kerne einer Gruppe beträgt r, während der Abstand zwischen den am nächsten beieinander liegenden Kerne unterschiedlichen Gruppen z beträgt.

Für z gilt $z = r(1 + \dfrac{a}{n})$, wobei r der Abstand der Handhabungselemente innerhalb einer Gruppe ist und $n$, $a \in IN$ mit $n > 1$. In den in den Figuren gezeigten Beispielen ist a = 1 und n = 3, sodass z = 4/3 r ist.

Im Gegensatz zu dem bekannten Stand der Technik, bei der die Abstände in Reihenrichtung alle gleich groß waren, ist nun erfindungsgemäß vorgesehen, dass die Abstände innerhalb der Gruppen kleiner sind als der Abstand zwischen benachbarten Gruppen. Der Grund hierfür ist, dass die für die Herstellung der Preforms notwendige plastifizierte Schmelze innerhalb der Platte zugeführt werden muss. Der dafür notwendige Kanal erlaubt es nicht, dass die Kerne 5 und 6 näher beieinander angeordnet sind. Innerhalb der Gruppen kann jedoch auf Kanäle mit großem Querschnitt verzichtet werden, sodass die Abstände innerhalb einer Gruppe reduziert werden können, was Material einspart oder die Möglichkeit eröffnet, bei einer Kernplatte gleicher Größe mehr Kerne unterzubringen, wodurch das Spritzgießwerkzeug eine höhere Ausgangsleistung aufweist.

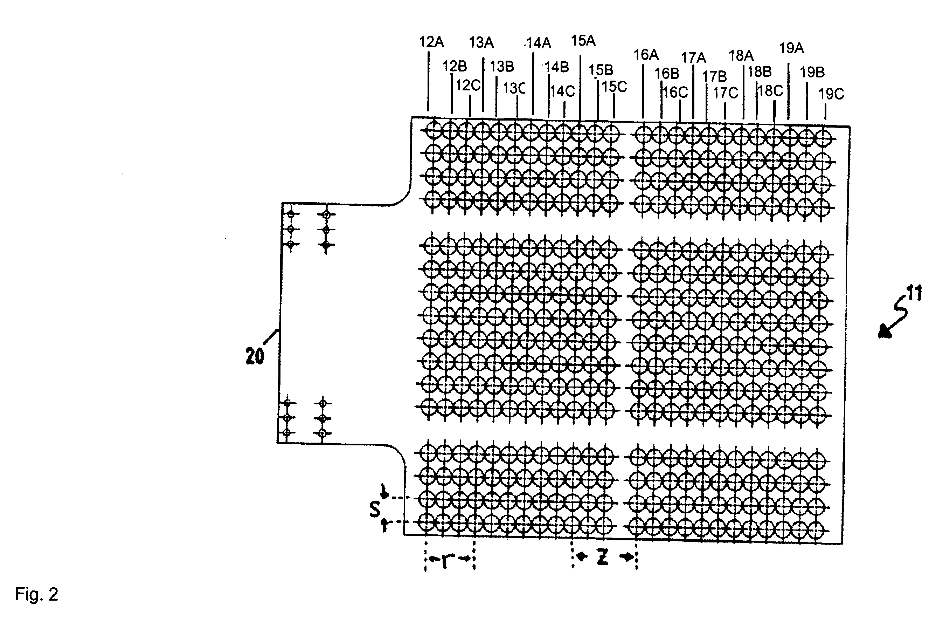

In Figur 2 ist eine schematische Draufsicht auf eine Entnahmeplatte 11 gezeigt. Die Entnahmeplatte 11 weist einen Befestigungsabschnitt 20 auf, mit der die Platte an einem Roboterarm befestigt werden kann, mit dem die Entnahmeplatte in die geöffnete Form bewegt werden kann, um die Preforms aus der Form aufzunehmen. Die Entnahmeplatte 11 weist Spalten 12A, 13A, 14A, 15A, 16A, 17A, 18A und 19A mit Aufnahmekavitäten auf, die ebenfalls in Reihen und Spalten angeordnet sind. Die Aufnahmekavitäten haben in Spaltenrichtung ebenfalls den Abstand s, während sie in Reihenrichtung den Abstand r aufweisen, wie in Figur 2 eingezeichnet ist. Auch hier sind die einzelnen Spalten in Reihenrichtung in Gruppen aufgeteilt, sodass sich eine Gruppe mit Spalten aus Aufnahmekavitäten 12A, 13A und 14A und 15A sowie eine weitere Gruppe mit den Spalten aus Aufnahmekavitäten 16A, 17A, 18A und 19A ergibt.

Um die Beschreibung zu vereinfachen, werden im folgenden die einzelnen Spalten 12A, 13A, 14A, 15A, 16A, 17A, 18A und 19A von Aufnahmekavitäten auch lediglich als Aufnahmekavitäten 12A, 13A, 14A, 15A, 16A, 17A, 18A und 19A bezeichnet. Dennoch besteht jede Aufnahmekavität 12A, 13A, 14A, 15A, 16A, 17A, 18A und 19A aus mehreren in Spaltenrichtung angeordneten Aufnahmekavitäten.

Die Entnahmeplatte 11 kann in das geöffnete Werkzeug geführt werden, sodass die Aufnahmekavität 12A den Preform von dem Kern 2 (siehe Figur 1) aufnehmen kann, während die Aufnahmekavität 13A den Preform von dem Kern 3 aufnehmen kann, usw.

Die Entnahmeplatte weist mehrere Sätze von Aufnahmekavitäten auf. Der erste Satz besteht aus den Aufnahmekavitäten 12A, 13A, 14A, 15A, 16A, 17A, 18A, 19A, der zweite Satz besteht aus den Aufnahmekavitäten 12B, 13B, 14B, 15B, 16B, 17B, 18B und 19B und der dritte Satz besteht schließlich aus den Aufnahmekavitäten 12C, 13C, 14C, 15C, 16C, 17C, 18C und 19C.

Die Entnahmeplatte 11 kann in drei unterschiedlichen Positionen zwischen den geöffneten Werkzeughälften, d.h. zwischen der Kernplatte und der Kavitätenplatte positioniert werden, wobei in einer Position der Kern 2 mit der Aufnahmekavität 12A ausgerichtet ist, während in der zweiten Position diese mit der Aufnahmekavität 12B und in der dritten Position mit der Aufnahmekavität 12C ausgerichtet ist. In gleicher Weise ist beispielsweise der Kern 6 in der ersten Position mit der Aufnahmekavität 16A ausgerichtet, in der zweiten Position mit der Aufnahmekavität 16B und in der dritten Position mit der Aufnahmekavität 16C ausgerichtet.

In der jeweiligen Position können die Preforms von den Kernen in die Aufnahmekavitäten übergeben werden. Bei der Entnahme der Preforms des nächsten Spritzgießzyklus wird die Entnahmeplatte in eine andere Position gebracht, sodass die Preforms über einen längeren Zeitraum in der Aufnahmekavität verbleiben können. Sie müssen erst dann entnommen werden, wenn dieser Satz Aufnahmekavitäten zur Aufnahme der nächsten Preforms gebraucht wird.

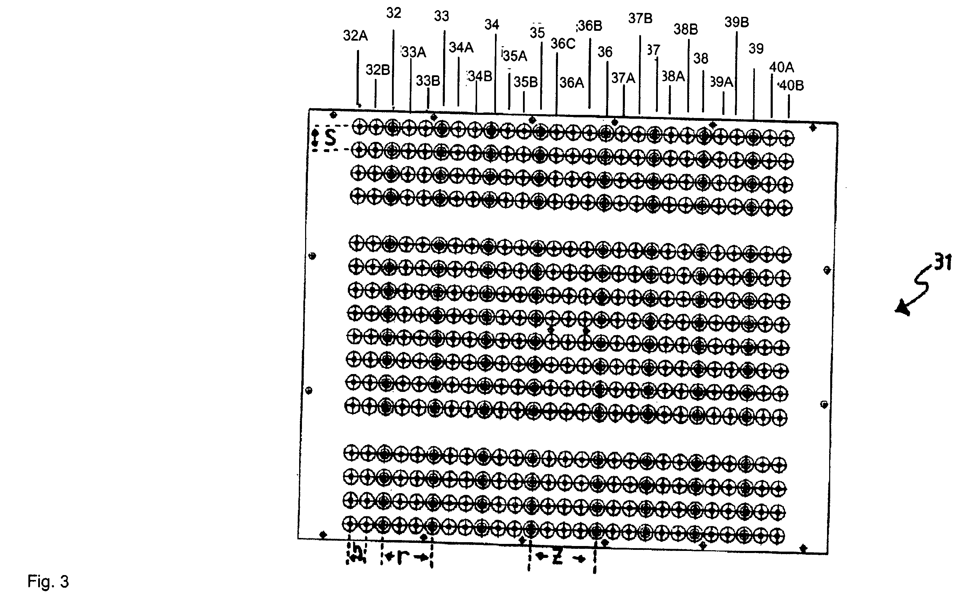

Zu diesem Zweck wird die in Figur 3 gezeigte Nachbehandlungsplatte verwendet. Die Nachbehandlungsplatte 31 weist Entnahmeelemente 32 bis 39 auf, die hier als Entnahmestifte ausgebildet sind. Auch diese Entnahmeelemente haben in Spaltenrichtung den Abstand s, während sie in Reihenrichtung den Abstand r haben. Auch hier sind die Entnahmeelemente in zwei Gruppen 32 bis 35 einerseits und 36 bis 39 andererseits aufgeteilt, wobei der Abstand in Reihenrichtung zwischen den Elementen einer Gruppe z beträgt. Zur Entnahme der nachbehandelten, d.h. vollständig abgekühlten Preforms aus der Entnahmeplatte kann die Nachbehandlungsplatte wieder in drei verschiedenen Positionen relativ zur Entnahmeplatte positioniert werden, sodass beispielsweise der Entnahmestift 32 nacheinander die Aufnahmekavitäten 12A, 12B und 12C anfahren kann.

Zusätzlich weist die Nachbehandlungsplatte noch mehrere, im gezeigten Beispiel zwei, Gruppen von Nachbehandlungselementen, die hier als Kühlstifte ausgebildet sind, auf. Die Kühlstifte 32A bis B, 33A bis B, 34A bis B, 35A bis B, 36A bis B, 37A bis B, 38A bis B, 39A bis B und 40A bis B sind ebenfalls in Spalten und Reihen angeordnet und haben ebenfalls in Spaltenrichtung den Abstand s. In Reihenrichtung haben die einzelnen Nachbehandlungsstifte eines Satzes den Abstand r und bilden ebenfalls wieder zwei Gruppen, die mit dem Abstand z voneinander beabstandet sind. Der Abstand zwischen zwei benachbarten Nachbehandlungsstiften verschiedener Sätze beträgt h. h ist im gezeigten Beispiel r/3. Die Nachbehandlungsplatte weist den zusätzlichen Kühlstift 36 C auf, dessen Funktion später noch erläutert wird.

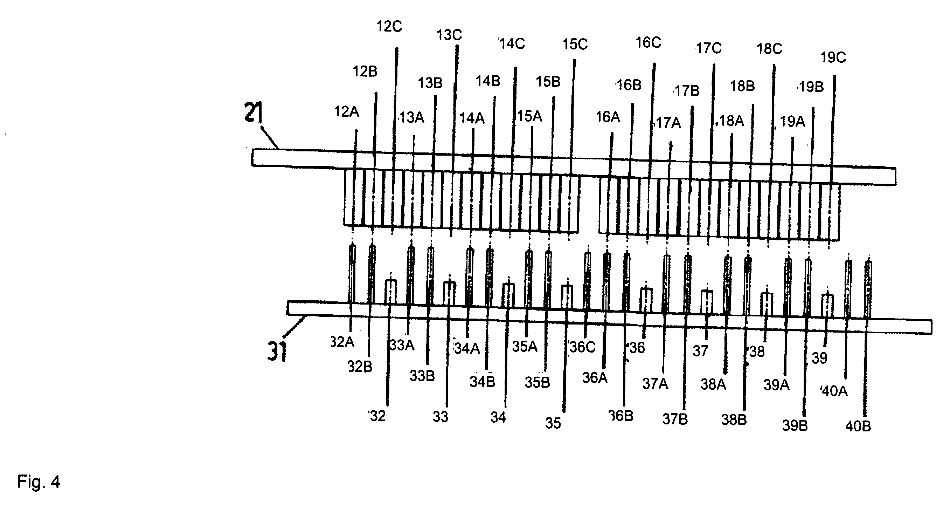

In Figur 4 ist zur Verdeutlichung eine Seitenansicht auf die Entnahmeplatte 21 und die hierzu ausgerichtete Nachbehandlungsplatte 31 dargestellt. In der dargestellten Position ist beispielsweise der Entnahmestift 32 in der Lage, einen Preform, der sich in der Aufnahmekavität 12C befindet aufzunehmen, während die beiden zugeordneten Kühlstifte 32A und 32B die in den Aufnahmekavitäten 12A und 12B befindlichen Preforms kühlen.

In der gezeigten Position sind die Kühlstifte 36C sowie 40A und 40B nicht in Funktion.

Wie bereits ausgeführt, kann die Entnahmeplatte 21 relativ zur Nachbehandlungsplatte 31 in drei unterschiedlichen Positionen positioniert werden. In einer zweiten Position, die nicht dargestellt ist, ist der Kühlstift 32 zu der Aufnahmekavität 12B ausgerichtet, sodass dann der Kühlstift 32A außer Funktion tritt, da der Kühlstift 32B dann mit der Aufnahmekavität 12A zusammenarbeitet. In dieser zweiten Position werden dann auch der Kühlstift 36C zur Kühlung der Aufnahmekavität 15C sowie der Kühlstift 40A zur Kühlung der Aufnahmekavität 19C benötigt.

Schließlich ist in der dritten (ebenfalls nicht dargestellten) Position der Entnahmestift 32 gegenüber der Aufnahmekavität 12A angeordnet, sodass die beiden Kühlstifte 32A und 32B außer Funktion treten. In dieser Position arbeitet nun der Kühlstift 36A mit der Aufnahmekavität 15C zusammen.

Man erkennt nun deutlich, dass aufgrund der erfindungsgemäß gewählten Anordnung der Kavitäten und Kerne und der daraus resultierenden Anordnung der Aufnahmekavitäten sowie der Entnahme- und Kühlstifte trotz des unterschiedlichen Abstandes zwischen den Gruppen der Kühlstift 36C sowohl mit der Aufnahmekavität 15C der ersten Gruppe in der beschriebenen dritten Position als auch mit der Aufnahmekavität 16A der zweiten Gruppe in der in Figur 4 gezeigten ersten Position zusammenarbeiten kann.

Durch die erfindungsgemäße Anordnung kann ein deutlich kompakteres Spritzgießwerkzeug hergestellt werden, ohne den Durchmesser des Heißkanals zu verringern. Grundsätzlich wäre es auch denkbar, die Handhabungselemente in mehr als zwei Gruppen aufzuteilen, wobei dann für benachbarte Gruppen jeweils die beanspruchten Abstände einzuhalten wären.

Bezugszeichenliste

| | |
|---|---|
| 1 | Kernplatte |
| 2-9 | Kerne bzw. Handhabungselemente |
| 10 | Führungssäule |
| 11 | Entnahmeplatte |
| 20 | Befestigungsabschnitt |
| 12A-19A | 1. Satz Aufnahmekavitäten |
| 12B-19B | 2. Satz Aufnahmekavitäten |
| 12C-19C | 3. Satz Aufnahmekavitäten |
| 31 | Nachbehandlungsplatte |
| 32-39 | Entnahmeelemente |
| 32A,B -39A,B, 36C | Kühlstifte |

**Patentansprüche**

1. Spritzgießwerkzeugplatte zur Verwendung in einem Spritzgießwerkzeug zur Herstellung von Formlingen mit einer Vielzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist, **dadurch gekennzeichnet, dass** eine Reihe von Handhabungselementen durch zwei Gruppen von Handhabungselementen gebildet wird, die Handhabungselemente Kavitäten oder Kerne sind, deren Innen- bzw. Außenkontur der Außen- bzw. Innenkontur eines herzustellenden Formlings entspricht, wobei für den Abstand z zwischen den Gruppen von Handhabungselementen gilt $z = r(1 + \frac{a}{n})$, wobei r n der Abstand der Handhabungselemente innerhalb einer Gruppe ist und $n, a \in IN$ mit $n > 1$.

2. Spritzgießwerkzeugplatte zur Verwendung in einem Spritzgießwerkzeug zur Herstellung von Formlingen mit einer Vielzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist, **dadurch gekennzeichnet, dass** eine Reihe von Handhabungselementen durch zwei Gruppen von Handhabungselementen gebildet wird, die Spritzgießwerkzeugplatte eine Entnahmeplatte zur Entnahme von Formlingen aus einer Spritzgießform mit einer Spritzgießwerkzeugplatte nach Anspruch 1 ist, wobei die Handhabungselemente Elemente zur Aufnahme von Formlingen aus der Spritzgießform, vorzugsweise Aufnahmehülsen, sind, wobei die Entnahmeplatte eine Mehrzahl von Handhabungselementesätze aufweist, wobei jeder Handhabungselementesatz eine Vielzahl von in Spalten und Reihen angeordneten Handhabungselemente aufweist, wobei der Abstand r zwischen benachbarten Handhabungselementen eines Handhabungselementesatzes innerhalb der Reihen größer als der Abstand s zwischen benachbarten Handhabungselementen dieses Handhabungselementesatzes innerhalb der Spalten ist, wobei eine Reihe von Handhabungselementen dieses Handhabungselementesatzes durch zwei Gruppen von Handhabungselementen des Handhabungselementesatzes gebildet wird, wobei für den Abstand z zwischen den Gruppen von Handhabungselementen des Handhabungselementesatzes gilt $z = r(1 + \frac{a}{n})$, wobei r der Abstand der Handhabungselemente des Handhabungselementesatzes innerhalb einer Gruppe ist und $n, a \in IN$ mit $n > 1$ und $a < n$.

3. Spritzgießwerkzeugplatte zur Verwendung in einem Spritzgießwerkzeug zur Herstellung von Formlingen mit einer Vielzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist, **dadurch gekennzeichnet, dass** eine Reihe von Handhabungselementen durch zwei Gruppen von Handhabungselementen gebildet wird, die Spritzgießwerkzeugplatte eine Nachbehandlungsplatte ist und die Handhabungselemente Entnahmeelemente, vorzugsweise Entnahmestifte, zur Entnahme der Formlinge aus einer Entnahmeplatte sind, wobei für den Abstand z zwischen den Gruppen von Handhabungselementen gilt $z = r(1 + \frac{a}{n})$, wobei r der Abstand der Handhabungselemente innerhalb einer Gruppe ist und $n, a \in IN$ mit $n > 1$.

4. Spritzgießwerkzeugplatte nach einem der Ansprüche 1 bis 3, **dadurch gekennzeichnet, dass** $a < n$.

5. Spritzgießwerkzeugplatte nach einem der Ansprüche 1 bis 4, **dadurch gekennzeichnet, dass** n<5 und vorzugsweise n=3 ist.

6. Spritzgießwerkzeugplatte nach einem der Ansprüche 1 bis 5, **dadurch gekennzeichnet, dass** a = 1 ist.

7. Spritzgießwerkzeugplatte nach Anspruch 2 oder einem der Ansprüche 4 bis 6, soweit auf Anspruch 2 rückbezogen, **dadurch gekennzeichnet, dass** die Anzahl der Handhabungselementesätze n beträgt.

8. Spritzgießwerkzeugplatte nach Anspruch 7, **dadurch gekennzeichnet, dass** jedem Handhabungselement eines ersten Handhabungselementesatzes ein Handhabungselement eines zweiten Handhabungselementesatzes zugeordnet ist, wobei die Handhabungselemente dafür vorgesehen sind, nacheinander Formlinge aus der Spritzgießform aufzunehmen, wobei vorzugsweise für den Abstand h zwischen den zugeordneten Handhabungselementes gilt: h = r / n.

9. Spritzgießwerkzeugplatte nach Anspruch 3 oder einem der Ansprüche 4 bis 6, soweit auf Anspruch 3 rückbezogen, **gekennzeichnet durch** zumindest einen Nachbehandlungssatz, welcher eine Vielzahl von in Spalten und Reihen angeordneten Nachbehandlungselemente, vorzugweise Kühlstifte aufweist, wobei der Abstand r zwischen benachbarten Nachbehandlungselementen des Nachbehandlungssatzes innerhalb der Reihen größer als der Abstand s zwischen benachbarten Nachbehandlungselementen des Nachbehandlungssatzes innerhalb der Spalten ist, wobei eine Reihe von Nachbehandlungselementen des Nachbehandlungssatzes **durch** zwei Gruppen von Nachbehandlungselementen gebildet wird, wobei für den Abstand z zwischen den Gruppen von Nachbehandlungselementen

gilt $z = r(1 + \dfrac{a}{n})$, wobei r der Abstand der Nachbehandlungselementen innerhalb $n$ einer Gruppe ist und $n, a \in$

IN mit $n > 1$ und $a < n$.

10. Spritzgießwerkzeugplatte nach Anspruch 9, **dadurch gekennzeichnet, dass** die Anzahl der Nachbehandlungssätze n-1 beträgt.

11. Spritzgießwerkzeug zur Herstellung von Preforms mit einer als Kernplatte ausgebildeten Spritzgießwerkzeugplatte nach Anspruch 1, einer als Stiftplatte ausgebildeten Spritzgießwerkzeugplatte nach Anspruch 1, wobei die Kavitätenplatte und die Kernplatte relativ zueinander zwischen einer geschlossenen Position und einer geöffneten Position hin- und her bewegbar sind, wobei in der geschlossenen Position die als Kerne ausgebildeten Handhabungselemente der Kernplatte in die als Kavitäten ausgebildeten Handhabungselemente der Kavitätenplatte eingesetzt sind, wodurch sich zwischen Kernen einerseits und Kavitäten andererseits Formräume bilden, deren Innenkontur der Außenkontur der herzustellenden Formlingen entspricht, einer als Entnahmeplatte ausgebildeten Spritzgießwerkzeugplatte nach einem der Ansprüche 2, 7 oder 8, wobei die Entnahmeplatte zwischen einer Außenposition, in der die Entnahmeplatte nicht zwischen der Kavitätenplatte und der Kernplatte angeordnet ist, und mindestens zwei Entnahmepositionen, in denen die Entnahmeplatte zwischen der Kavitätenplatte und der Kernplatte angeordnet ist, hin- und herbewegt werden kann, wobei in jeder Entnahmeposition jeweils ein Handhabungselementesatz zu der Kern- oder Kavitätenplatte ausgerichtet angeordnet ist, so dass die Formlinge aus der Kern- oder Kavitätenplatte zu den Handhabungselementen des ausgerichtet angeordneten Handhabungselementesatzes übergeben werden können, und einer als Nachbehandlungsplatte ausgebildeten Spritzgießwerkzeugplatte nach einem der Ansprüche 3, 9 oder 10.

## Claims

1. An injection molding tool plate for use in an injection molding tool for producing molded articles comprising a plurality of handling elements arranged in columns and rows, wherein the spacing r between adjacent handling elements within the rows is greater than the spacing s between adjacent handling elements within the columns, **characterised in that** a row of handling elements is formed by two groups of handling elements, the handling elements are cavities or cores whose inside or outside contour corresponds to the outside or inside contour of a molded article to be produced, wherein the following applies for the spacing z between the groups of handling elements: $z = r(1 + \dfrac{a}{n})$,

wherein r is the spacing of the handling elements within a group and $n$, a $\in$ IN with $n > 1$.

2. An injection molding tool plate for use in an injection molding tool for producing molded articles comprising a plurality of handling elements arranged in columns and rows, wherein the spacing r between adjacent handling elements within the rows is greater than the spacing s between adjacent handling elements within the columns, **characterised in that** a row of handling elements is formed by two groups of handling elements, the injection molding tool plate is a removal plate for the removal of molded articles from an injection molding mold having an injection molding tool plate as set forth in claim 1, wherein the handling elements are elements for receiving molded articles from the injection molding mold, preferably receiving sleeves, wherein the removal plate has a plurality of handling element sets, wherein each handling element set has a plurality of handling elements arranged in columns and rows, wherein the spacing r between adjacent handling elements of a handling element set within the rows is greater than the spacing s between adjacent handling elements of said handling element set within the columns, wherein a row of handling elements of said handling element set is formed by two groups of handling elements of the handling element set, wherein the following applies for the spacing z between the groups of handling elements of the handling element

set: $z = r(1 + \dfrac{a}{n})$, wherein r is the spacing of the handling elements of $n$ the handling element set within a group and $n, a \in IN$ with $n > 1$ and $a < n$.

3. An injection molding tool plate for use in an injection molding tool for producing molded articles comprising a plurality of handling elements arranged in columns and rows, wherein the spacing r between adjacent handling elements within the rows is greater than the spacing s between adjacent handling elements within the columns, **characterised in that** a row of handling elements is formed by two groups of handling elements, the injection molding tool plate is a post-treatment plate and the handling elements are removal elements, preferably removal pins, for removal of the molded articles from a removal plate, wherein the following applies for the spacing z between the groups of handling elements: $z = r(1 + \dfrac{a}{n})$, wherein r is the spacing of the handling elements $n$ within a group and $n, a \in IN$ with $n > 1$.

4. An injection molding tool plate as set forth in one of claims 1 through 3 **characterised in that** $a < n$.

5. An injection molding tool plate as set forth in one of claims 1 through 4 **characterised in that** n < 5 and preferably n = 3.

6. An injection molding tool plate as set forth in one of claims 1 through 5 **characterised in that** a = 1.

7. An injection molding tool plate as set forth in claim 2 or according to one of claims 4 through 6, when dependent on claim 2, **characterised in that** the number of the handling element sets is n.

8. An injection molding tool plate as set forth in claim 7 **characterised in that** associated with each handling element of a first handling element set is a handling element of a second handling element set, wherein the handling elements are intended to successively receive molded articles from the injection molding mold, wherein preferably the following applies for the spacing h between the associated handling elements: $h = r / n$.

9. An injection molding tool plate as set forth in claim 3 or according to one of claims 4 through 6, when dependent on claim 3, **characterised by** at least one post-treatment set having a plurality of post-treatment elements arranged in columns and rows, preferably cooling pins, wherein the spacing r between adjacent post-treatment elements of the post-treatment set within the rows is greater than the spacing s between adjacent post-treatment elements of the post-treatment set within the columns, wherein a row of post-treatment elements of the post-treatment set is formed by two groups of post-treatment elements, wherein the following applies for the spacing z between the groups of post-treatment elements: $z = r(1 + \dfrac{a}{n})$, wherein r is the spacing of the post-treatment $n$ elements within a group and $n, a \in IN$ with $n > 1$ and $a < n$.

10. An injection molding tool plate as set forth in claim 9 **characterised in that** the number of post-treatment sets is n - 1.

11. An injection molding tool for the production of preforms comprising an injection molding tool plate as set forth in claim 1 which is in the form of a core plate, an injection molding tool plate as set forth in claim 1 which is in the form of a pin plate, wherein the cavity plate and the core plate are reciprocable relative to each other between a closed position and an opened position, wherein in the closed position the handling elements of the core plate, that are in the form of cores, are inserted into the handling elements of the cavity plate, that are in the form of cavities, whereby there are formed between cores on the one hand and cavities on the other hand mold spaces whose inside contour corresponds to the outside contour of the molded articles to be produced, an injection molding tool plate as set forth in one of claims 2, 7 or 8, that is in the form a removal plate, wherein the removal plate can be reciprocated between an external position in which the removal plate is not arranged between the cavity plate and the core plate and at least two removal positions in which the removal plate is arranged between the cavity plate and the core plate, wherein in each removal position a respective handling element set is arranged in oriented relationship with the core or cavity plate so that the molded articles can be transferred from the core or cavity plate to the handling elements of the orientedly arranged handling element set, and an injection molding tool plate as set forth in one of claims 3, 9 or 10, that is in the form of a post-treatment plate.

**Revendications**

1. Plaque outil de moulage par injection destinée à être utilisée dans un outil de moulage par injection pour la fabrication d'ébauches avec une multiplicité d'éléments de manipulation disposés en colonnes et rangées, la distance r entre des éléments de manipulation voisins à l'intérieur des rangées étant plus grande que la distance s entre des éléments de manipulation voisins à l'intérieur des colonnes, **caractérisée en ce qu'**une rangée d'éléments de manipulation est formée de deux groupes d'éléments de manipulation, les éléments de manipulation sont des cavités ou des noyaux dont le contour interne ou respectivement externe correspond au contour externe ou respectivement interne d'une ébauche à fabriquer, où, pour la distance z entre les groupes d'éléments de manipulation, on a $z = r(1 + \frac{a}{n})$, r étant la distance des éléments de manipulation à l'intérieur d'un groupe, et **n, a** $\in$ **IN** avec n > 1.

2. Plaque outil de moulage par injection destinée à être utilisée dans un outil de moulage par injection pour la fabrication d'ébauches avec une multiplicité d'éléments de manipulation disposés en colonnes et rangées, la distance r entre des éléments de manipulation voisins à l'intérieur des rangées étant plus grande que la distance s entre des éléments de manipulation voisins à l'intérieur des colonnes, **caractérisée en ce qu'**une rangée d'éléments de manipulation est formée de deux groupes d'éléments de manipulation, la plaque outil de moulage par injection étant une plaque de prélèvement pour le prélèvement d'ébauches à partir d'un moule d'injection avec une plaque outil de moulage par injection selon la revendication 1, les éléments de manipulation étant des éléments destinés à la réception d'ébauches en provenance du moule d'injection, de préférence des douilles de réception, la plaque de prélèvement présentant une pluralité de jeux d'éléments de manipulation, chaque jeu d'éléments de manipulation présentant une multiplicité d'éléments de manipulation disposés en colonnes et rangées, la distance r entre des éléments de manipulation voisins d'un jeu d'éléments de manipulation à l'intérieur des rangées étant plus grande que la distance s entre des éléments de manipulation voisins de ce jeu d'éléments de manipulation à l'intérieur des colonnes, une rangée d'éléments de manipulation de ce jeu d'éléments de manipulation étant formée de deux groupes d'éléments de manipulation du jeu d'éléments de manipulation, où, pour la distance z entre les groupes d'éléments de manipulation du jeu d' éléments de manipulation, on a $z = r(1 + \frac{a}{n})$, r étant la distance des éléments de manipulation du jeu d'éléments de manipulation à l'intérieur d'un groupe, et **n, a** $\in$ **IN** avec n > 1 et $a < n$.

3. Plaque outil de moulage par injection destinée à être utilisée dans un outil de moulage par injection pour la fabrication d'ébauches avec une multiplicité d'éléments de manipulation disposés en colonnes et rangées, la distance r entre des éléments de manipulation voisins à l'intérieur des rangées étant plus grande que la distance s entre des éléments de manipulation voisins à l'intérieur des colonnes, **caractérisée en ce qu'**une rangée d'éléments de manipulation est formée de deux groupes d'éléments de manipulation, la plaque outil de moulage par injection étant une plaque de post-traitement, et les éléments de manipulation étant des éléments de prélèvement, de préférence des broches de prélèvement, pour le prélèvement des ébauches à partir d'une plaque de prélèvement, où, pour la distance z entre les groupes d'éléments de manipulation, on a $z = r(1 + \frac{a}{n})$, r étant la distance des éléments de manipulation à l'intérieur d'un groupe, et **n, a** $\in$ **IN** avec n > 1.

4. Plaque outil de moulage par injection selon l'une des revendications 1 à 3, **caractérisée en ce que** $a < n$.

5. Plaque outil de moulage par injection selon l'une des revendications 1 à 4, **caractérisée en ce que** n<5 et de préférence n = 3.

6. Plaque outil de moulage par injection selon l'une des revendications 1 à 5, **caractérisée en ce que** a = 1.

7. Plaque outil de moulage par injection selon la revendication 2 ou l'une des revendications 4 à 6, dans la mesure où elles se réfèrent à la revendication 2, **caractérisée en ce que** le nombre de jeux d'éléments de manipulation est égal à n.

8. Plaque outil de moulage par injection selon la revendication 7, **caractérisée en ce qu'**un élément de manipulation d'un deuxième jeu d'éléments de manipulation est affecté à chaque élément de manipulation d'un premier jeu d'éléments de manipulation, les éléments de manipulation étant prévus pour recevoir les unes derrière les autre des ébauches en provenance du moule d'injection, où, pour la distance h entre les éléments de manipulation affectés, on a de préférence : $h = r / n.$

**9.** Plaque outil de moulage par injection selon la revendication 3 ou l'une des revendications 4 à 6, dans la mesure où elles se réfèrent à la revendication 3, **caractérisée par** au moins un jeu de post-traitement qui présente une multiplicité d'éléments de post-traitement, de préférence des broches de refroidissement, disposés en colonnes et rangées, la distance r entre des éléments de post-traitement voisins du jeu de post-traitement à l'intérieur des rangées étant plus grande que la distance s entre des éléments de post-traitement voisins du jeu de post-traitement à l'intérieur des colonnes, une rangée d'éléments de post-traitement du jeu de post-traitement étant formée de deux groupes d'éléments de post-traitement, où, pour la distance z entre les groupes d'éléments de post-traitement, on a $z = r(1 + \dfrac{a}{n})$, r étant la distance des éléments de post-traitement à l'intérieur d'un groupe, et $n, a \in IN$ avec n > 1 et $a < n$ .

**10.** Plaque outil de moulage par injection selon la revendication 9, **caractérisée en ce que** le nombre de jeux de post-traitement est égal à n-1.

**11.** Outil de moulage par injection pour la fabrication de préformes avec une plaque outil de moulage par injection constituée en tant que plaque de noyaux selon la revendication 1, une plaque outil de moulage par injection constituée en tant que plaque de broches selon la revendication 1, la plaque de cavités et la plaque de noyaux pouvant se déplacer dans un mouvement de va-et-vient l'une par rapport à l'autre entre une position fermée et une position ouverte, les éléments de manipulation de la plaque de noyaux constitués en tant que noyaux étant, dans la position fermée, introduits dans les éléments de manipulation de la plaque de cavités constitués en tant que cavités, ce qui fait que, entre des noyaux d'un côté et des cavités d'un autre côté, il se forme des espaces de moulage dont le contour intérieur correspond au contour extérieur des ébauches à fabriquer, une plaque outil de moulage par injection constituée en tant que plaque de prélèvement selon l'une des revendications 2, 7 ou 8, la plaque de prélèvement pouvant être déplacée dans un mouvement de va-et-vient entre une position extérieure, dans laquelle la plaque de prélèvement n'est pas disposée entre la plaque de cavités et la plaque de noyaux, et au moins deux positions de prélèvement dans lesquelles la plaque de prélèvement est disposée entre la plaque de cavités et la plaque de noyaux, un jeu d'éléments de manipulation étant respectivement, dans chaque position de prélèvement, orienté par rapport à la plaque de noyaux ou la plaque de cavités de telle sorte que les ébauches peuvent être transférées à partir de la plaque de noyaux ou de la plaque de cavités vers les éléments de manipulation du jeu d'éléments de manipulation disposé de façon orientée, et une plaque outil de moulage par injection constituée en tant que plaque de post-traitement selon l'une des revendications 3, 9 ou 10.

Fig. 1

Fig. 2

EP 2 825 361 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006060893 A

- WO 2010066308 A

**In der Beschreibung aufgeführte Nicht-Patentliteratur**

- Höhere Leistung, geringer Aufwand. *Zeitschrift Getränkeindustrie,* Mai 2011, 12-14